# EUROPEAN PATENT APPLICATION

(11) **EP 4 488 877 A1**
(43) Date of publication of application: **08.01.2025**
(21) Application number: 23184136.2
(22) Date of filing: 07.07.2023
(51) Int. Cl.: G06K 19/07, G06K 19/077

(54) **RFID SENSING UNIT AND RFID SENSOR DEVICE INCLUDING THE SAME**

(71) Applicant: Assa Abloy AB, 107 23 Stockholm (SE)
(72) Inventor: FURTER, Urs, 1845 Noville (CH); HORISBERGER, Gilles, 1806 Saint-Légier (CH)
(74) Representative: Kramer Barske Schmidtchen Patentanwälte PartG mbB

(57) **Abstract**

An RFID sensing unit for an RFID sensor device includes a columnar substrate (14). An RFID chip (18) having a sensing capability is provided on one end surface (S2) of the substrate (14), and a coupling antenna (16) electrically connected to the RFID sensor chip (18) is provided on the other end surface (S2) of the substrate (14). In this manner, the RFID chip (18) can be spaced from the plane in which the coupling antenna (16) and, in particular, the booster antenna to be inductively coupled to the same are arranged. This improves the performance of the associated RFID sensor device.

## Description

### Technical Field

The present disclosure generally relates to radio frequency identification (RFID) devices, in particular, to an RFID sensing unit for an RFID sensor device and an RFID sensor device including the RFID sensing unit.

### Background

Generally, RFID devices such as, for example, RFID cards, RFID tags, etc. include an RFID antenna and an integrated circuit provided on an RFID chip and connected to the RFID antenna. Upon presence of an electromagnetic field emitted by a reader device, the RFID antenna supplies energy from the electromagnetic field to the integrated circuit, which integrated circuit may communicate with the reader device using radio frequency (RF) communication protocols. In this manner, for example, data can be read from a memory associated with the integrated circuit, and can also be written into said memory, if desired.

Recently, RFID devices have been used as sensor devices for sensing physical quantities such as temperature, strain, and the like. In such applications, the RFID chip not only performs the usual RFID communications via the RFID antenna, but also transmits detection results from a sensing element integrated into the RFID chip. A sensor signal from the sensing element is converted to a modulated RF signal and transmitted via the RFID antenna.

The present disclosure is directed, at least in part, to improving or overcoming one or more aspects of prior systems.

### Summary of the Disclosure

According to one aspect of the present disclosure, a sensing unit for an RFID sensor device comprises a (for example, columnar) substrate having a first surface and an opposite second surface, the second surface being separated from the first surface by a height of the substrate, a coupling antenna provided on the first surface of the substrate, an RFID chip mounted on the second surface of the substrate, the RFID chip being configured to perform RFID communications and including sensing circuitry for sensing at least one physical quantity, and a pair of passages formed in the substrate, the pair of passages extending between the first surface and the second surface. A pair of electrical conductors is arranged in the pair of passages, the electrical conductors electrically connecting the RFID chip to the coupling antenna to allow the RFID chip to perform RFID communications via the coupling antenna.

According to another aspect of the present disclosure, an RFID sensor device comprises a support, an RFID booster antenna provided on the support, a cavity formed in the support, and the sensing unit of the above aspect disposed in the cavity. The first surface of the substrate is arranged adjacent to the RFID booster antenna to inductively couple the coupling antenna to the RFID booster antenna, and the RFID chip is spaced from the RFID booster antenna by the substrate.

Other features and aspects of the present disclosure will be apparent from the following description and the accompanying drawings.

### Brief Description of the Drawings

Fig. 1 is a schematic perspective view of an RFID sensor device in accordance with the present disclosure,
Fig. 2 is a schematic perspective view of a sensing unit in accordance with the present disclosure,
Fig. 3 is a schematic side sectional view of the sensing unit in accordance with the present disclosure, and
Fig. 4 is a schematic plan view of an RFID chip in accordance with the present disclosure.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of protection. Rather, the scope of protection shall be defined by the appended claims.

The present disclosure is based at least in part on the realization that, in a passive RFID chip with a sensing capability, commonly the required antenna connection and the integrated sensor are both positioned on the active side/surface of the chip. This results in major interference affecting either the electrical connection of the antenna or the sensing capability. In a typical example, if the RFID chip includes a light sensor, this light sensor would be totally blinded if assembled using a flip-chip process. In particular, the conductive glue or underfill material, which is used for the flip-chip assembly, covers the chip surface, and as said materials are generally not translucent, they will prevent light from reaching the sensor.

Another problem linked to the RFID chip including a sensing capability is related to the antenna connection. In order to achieve an optimum sensing capability, the RFID chip must be placed in close proximity to the surface or medium to be monitored, or needs to be in contact with the same. In particular, if the surface is electrically conductive, an antenna placed in close proximity to this surface would lose its RF communication performance.

In accordance with the present disclosure, it has been realized that the above disadvantages, in particular, an insufficient dynamic response, can be overcome by moving the electrical contact points between the RFID chip and the coupling loop of the same away from the RIFD chip and the surface/medium to the monitored by the passive transponder. This is facilitated by forming the RFID chip and the associated inductive coupling loop as an independent element, which is referred to as a sensing head or sensing unit herein. This sensing unit preferably has a cylindrical shape, where the RFID chip is placed on one of the end surfaces of the cylinder, and the inductive coupling antenna is placed on the opposite end surface of the cylinder. The distance between the RFID chip and the inductive coupling loop is determined by the cylinder height. With this configuration, the inductive coupling loop is spaced from the sensing circuitry of the RFID chip. The cylinder height is defined to have a sufficient spacing from the conductive surface to be sensed to the radiating RFID antenna, which is inductively coupled to the coupling loop of the sensing unit. Generally, this radiating RFID antenna will be in close proximity to the inductive coupling loop.

The RFID chip can be assembled using a flip-chip technology or via a bonding technology, depending on the application of the same, in particular, on a metallized surface of the cylinder of the sensing unit. The inductive coupling loop is formed, for example, by metallization on the opposite cylinder surface of the sensing unit. The electrical connection between the antenna pads connected to the RFID chip and the inductive coupling loop can be obtained by providing conductive vias inside the cylinder of the sensing unit.

With the above sensing unit, the RFID chip can be placed in close proximity to the surface to be monitored. Further, the antenna connections are spaced from the surface/medium to be monitored by the cylinder of the sensing unit. The RF signal transmission to the radiating RFID antenna may be obtained by using an inductive coupling, which avoids additional contacts between the RFID chip (and its coupling loop) and the radiating RFID antenna. Therefore, the reliability of the RFID sensor device can be increased.

Furthermore, the sensing unit can be easily mounted on the surface/medium to be monitored, for example, by using appropriate glue or filler to surround the RFID chip and fill a remaining gap between the RFID chip and a surface to be monitored. For example, a thermally conductive glue or paste can be used, wherein said glue or paste may also be translucent or transparent. In other applications, said filler may be omitted, such that the surface of the RFID chip including the sensing circuitry is exposed to face the surface to be monitored.

The present disclosure is also based at least in part on the realization that, using the above-described sensing unit, the sensing unit can have a standardized dimension and/or coupling impedance. Accordingly, different RFID chips can be used with the same sensing unit, and the sensing unit can be used with different radiating RFID antenna shapes. In particular, the inductive coupling to the radiating RFID antenna allows for easily implementing a desired shape of the radiating RFID antenna, depending on the specific use case.

The material for the substrate of the sensing unit is not particularly limited and can be adapted to the specific use. For example, the material can be a material that is used for standard PCBs, such as an FR4 epoxy resin PCB or a ceramic PCB, a metallized glass, or a metallized ceramic.

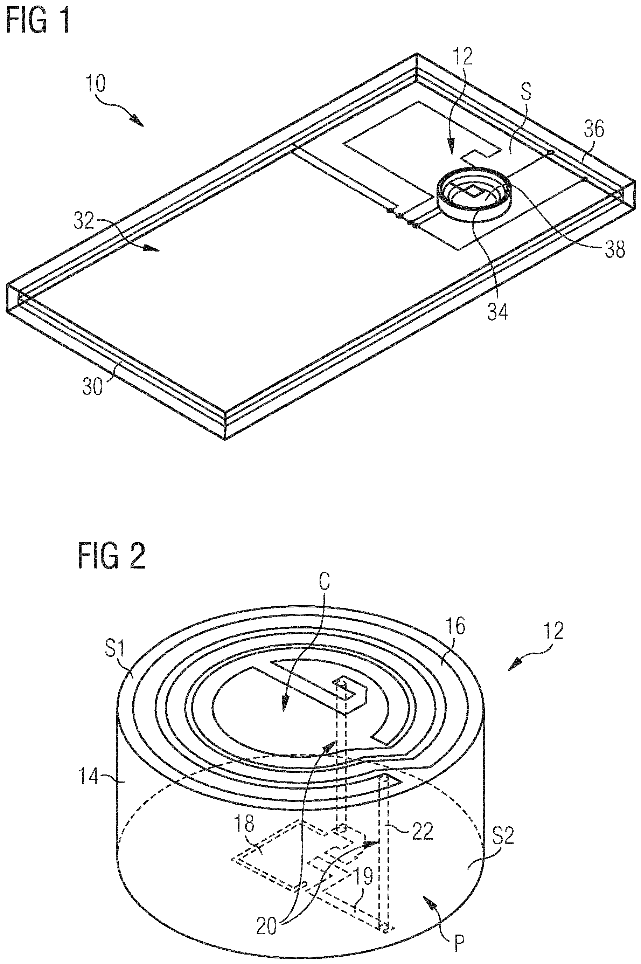

Referring to the drawings, Fig. 1 shows an exemplary RFID sensor device 10 in accordance with the present disclosure. As shown in Fig. 1, RFID sensor device 10 comprises a support 30, and an RFID booster antenna 32 provided on support 30. Here, it will be appreciated that support 30 may have any desired shape or configuration, as long as support 30 is able to support RFID booster antenna 32. For example, support 30 might be a printed circuit board, with RFID booster antenna 32 provided on one or both surfaces of support 30 in a known manner. In other embodiments, for example, support 30 may be a casing that supports and, optionally, also surrounds RFID booster antenna 32. For example, support 30 may be formed by a molding process or the like. In other embodiments, support 30 may also include RFID booster antenna 32 which is embedded in support 30, for example, also by using an overmolding process. As used herein, the expression "an RFID booster antenna provided on the support" therefore includes both the case in which RFID booster antenna 32 is arranged on a surface S of support 30, and the case in which RFID booster antenna 32 is embedded in support 30.

It will be appreciated that RFID booster antenna 32 may have any known configuration, which is suitable for the desired application of RFID sensor device 10. As such, it will be appreciated that RFID booster antenna 32 may, for example, include a plurality of planar portions, which may be connected by one or more linear portions, and which may be symmetrical or asymmetrical. Generally, however, the skilled person will realize that the inductive coupling loop of the sensing unit that will be described in the following is arranged at an appropriate position with respect to RFID booster antenna 32, for example, at a position adjacent to the linear sections of the same. This configuration of RFID devices is known to the skilled person, such that no further explanations will be given herein.

As shown in Fig. 1, support 30 includes a cavity 34 formed in support 30. A sensing unit 12, which will be described in more detail below, is disposed in cavity 34. Here, it will be appreciated that cavity 34 may have the form of a recess that opens in a surface of support 30, for example, a housing that accommodates RFID booster antenna 32. As will be described in more detail below, the bottom of cavity 34 is arranged adjacent to RFID booster antenna 32.

In some embodiments, RFID sensor device 10 may comprise an RF absorbing material 36 covering at least part of RFID booster antenna 32 on the side of sensing unit 12. For example, a material layer may be provided on top of RFID booster antenna 32, and a bottom surface of sensing unit 12 may be in contact with an upper surface of said material layer. In other embodiments, however, said material layer may include an opening for receiving sensing unit 12, such that the bottom surface of the same can be arranged essentially in the same plane as RFID booster antenna 32. In some embodiments, RF absorbing material 36 may be provided as an aluminum foil, a copper foil, a thin metal plate, or the like, which is electrically insulated from RFID booster antenna 12 and/or sensing unit 12, for example, by providing an appropriate intermediate layer or the like.

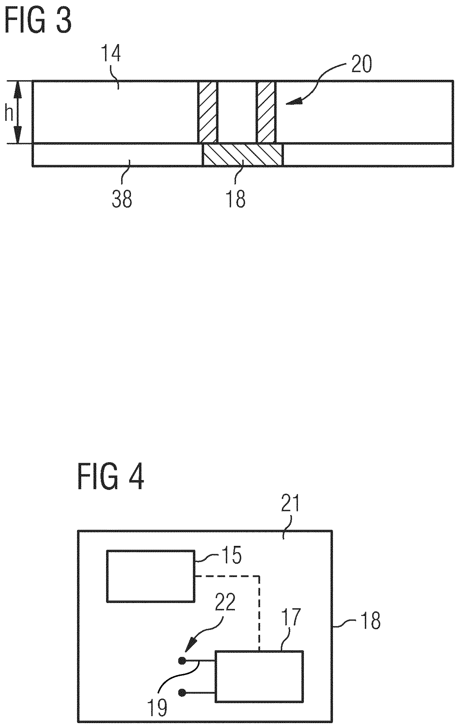

In some embodiments, a filler 38 may be provided inside cavity 34 to cover sensing unit 12, in particular, an RFID sensor chip 18 of the same (see Figs. 2 and 3). As previously mentioned, said filler 38 may, for example, be a thermally conductive and/or transparent or translucent adhesive or paste. In this manner, the sensing unit 12 can be additionally protected when RFID sensing device 10 is attached to a surface to be monitored.

Fig. 2 shows a schematic perspective view of sensing unit 12 for RFID sensor device 10 in accordance with an exemplary embodiment. As shown in Fig. 2, sensing unit 12 comprises a substantially columnar (i.e. cylindrical) substrate 14 having a first surface S1 and an opposite second surface S2. A coupling antenna 16 is provided on first surface S1 of substrate 14. Further, RFID chip 18 is mounted on second surface S2 of substrate 14. As initially mentioned, RFID chip 18 is configured to perform RFID communications and includes sensing circuitry 15 (see Fig. 4) for sensing at least one physical quantity.

A pair of passages 20, also referred to as vias or through-holes herein, is formed in substrate 14. The pair of passages 20 extends between first surface S 1 and second surface S2. A pair of electrical conductors 22 is arranged in the pair of passages 20, respectively. Electrical conductors 22 electrically connect RFID chip 18 to coupling antenna 16 to allow RFID chip 18 to perform RFID communications via coupling antenna 16.

Here, it will be appreciated that electrical conductors 22 may be formed in any desired manner and with any desired shape. For example, conductive wires can be inserted into passages 20 after forming the same in substrate 14. In other embodiments, however, electrical conductors 22 may be formed by metallization of passages 20 after formation of the same, perhaps in combination with formation of coupling antenna 16 and/or antenna pads 19, which are described in more detail below.

As shown in Fig. 2, in the exemplary embodiment, a pair of antenna pads 19 is formed on second surface S2, and electrically connects RFID chip 18 to electrical conductors 22. Here, it will be appreciated that antenna pads 19 can have any desired shape, as long as they are connected at one end to the electrical conductor inside of one of passages 20, and at the other end to RFID chip 18. The connection to RFID chip 18 can be established, for example, when RFID chip 18 is mounted to first surface S2 of substrate 14, for example, using a known technology such as flip-chip assembly, soldering or the like. In some embodiments, antenna pads 19 are formed as metallized surface portions on second surface S2.

Fig. 4 shows an example of RFID chip 18 in a schematic plan view. As shown in Fig. 4, RFID chip 18 includes communications and control circuitry 17, which is connected to coupling antenna 16 via antenna pads 19 and the pair of electrical conductors 22 provided in passages 20. Further, as shown in Fig. 4, RFID chip 18 includes sensing circuitry 15 for sensing at least one physical quantity. Here, it will be appreciated that sensing circuitry 15 may be embodied as a known microelectromechanical system (MEMS device), or any other appropriate circuitry that is adapted to sense a physical quantity such as temperature, strain, moisture, or ambient light at or adjacent to sensing circuitry 15. As RFID chips having such sensing capabilities are known, no detailed description will be given herein. Some examples include chips such as EM | aura-sense (EM4152), AM5 | (SL900A), ASYGN | (AS321X), AXZON | Magnus^{®}-S (AN002). In any case, it will be appreciated that both communications and control circuitry 17 and sensing circuitry 15 are formed on a die 21 in a known manner.

As previously mentioned, antenna pads 19 may be formed as metallized surface portions on second surface S2 of substrate 14. Likewise, coupling antenna 16 can also be formed as a metallized pattern on first surface S 1 of substrate 14. Such metallization processes are well-known, such that a detailed description will be omitted herein. For example, any chemical or physical deposition methods can be used to obtain metallized surface portions and the metallized pattern of coupling antenna 16. As previously mentioned, in some embodiments, conductors 22 may be formed at the same time as forming antenna pads 19 and coupling antenna 16.

In the example shown in Fig. 2, coupling antenna 16 includes a plurality of loops extending around a central portion C of first surface S1. Here, it will be appreciated that the higher the number of loops, the better the inductive coupling to RFID booster antenna 32. In other embodiments, only a single loop may be used.

It will be appreciated that coupling antenna 16 may have any desired shape, preferably wherein said shape conforms with the shape of substrate 14. Likewise, the connection to RFID chip 18, i.e., the pair of passages 20, can also be formed in any appropriate portion of first surface S1. For example, one of the pair of passages 20 may be formed in an outer peripheral region P of substrate 14, with the other one of the pair of passages 20 being formed near the central portion C of first surface S 1. In this manner, one of passages 20 can be formed adj acent to, for example, a mounting position of RFID chip 18 on opposite surface S2, with the other one of passages 20 being formed at the position where a terminal end of RFID antenna 16 is formed.

In some embodiments, the pair of passages 20 extends in a direction orthogonal to first surface S1 and second surface S2. In other words, if the shape of substrate 14 is essentially cylindrical, passages 20 may extend along the longitudinal direction of the cylinder. In this manner, a direct connection between antenna pads 19 and the ends of coupling antenna 18 can be obtained.

Substrate 14 may be made from any appropriate material, which electrically isolates the metallized structures formed on the opposite surfaces of substrate 14. For example, substrate 14 may be made from glass, ceramic or a resin such as PP and the like.

Fig. 3 shows a schematic side sectional view of substrate 14 including passages 20 and RFID chip 18. As initially mentioned, substrate 14 may have a height h which is sufficient to obtain the desired spacing between sensing circuitry 15 of RFID chip 18 and coupling antenna 16, i.e., RIFD booster antenna 32 inductively coupled to the same. For example, height h may be between around 1 mm and around 5 mm, preferably between around 2 mm and around 3 mm, and a diameter of substrate 14 may be between around 5 mm and around 20 mm, preferably between around 5 mm and around 15 mm.

The cross-section of substrate 14 in the direction perpendicular to the longitudinal direction is not particularly limited. For example, the cross-section of substrate 14 may be substantially circular, substantially elliptical, or substantially polygonal. It will be appreciated that, generally, the shape of cavity 34 will correspond to the cross-section of substrate 14, such that the same can be easily mounted inside cavity 34.

As shown, for example, in Fig. 3, RFID chip 18 may be surrounded by filler 38. Here, it will be appreciated that filler 38, for example, a glue or paste, can be applied to sensing unit 12 prior to assembling the same with support 30 and RFID booster antenna 32. For example, sensing unit 12 may be attached to the surface to be monitored using filler 38, and support 30 including RFID booster antenna 32 may be placed over sensing unit 12 after attaching the same. In other embodiments, however, sensing unit 12 may be combined with support 30 prior to attaching the same to the surface to be monitored.

It will be appreciated that, due to the predetermined shape of sensing unit 12, in particular, substrate 14, as well as a predetermined shape of coupling antenna 16, a sensing unit 12 having desired fixed properties can be obtained, for example, with a coupling antenna that has a predetermined resonance frequency close to the RF activating frequency. In this manner, sensing unit 12, which has the resonance frequency close to the RF activating frequency, can be easily combined with different RFID booster antennas 18 in order to obtain desired characteristics of RFID sensor device 10.

### Industrial applicability

As described above, with the sensing unit 12 described herein, it is possible to easily integrate sensor unit 12 into an RFID sensor device 10, while assuring the performance of said RFID sensor device.

An exemplary method of assembling sensor device 10 will be described in the following.

In some embodiments, sensing unit 12, which is configured in the above-described manner, may be inserted into cavity 34 formed in support 30 of RFID booster antenna 32. For example, RFID booster antenna 32 may be formed in a known manner on support 30, which serves as a substrate for RFID booster antenna 32. Support 30 may include cavity 34, which is formed such that a bottom of cavity 34 is arranged in essentially the same plane as RFID booster antenna 32. In this state, sensing unit 12 may be inserted into cavity 34, and, for example, may be fixed inside the same using the above-mentioned filler 38. In other embodiments, however, a mechanical connection may be obtained when sensing unit 12 is inserted into support 30, for example, by snap-fitting or the like.

In any case, after assembly, RFID sensor device 10 including sensing unit 12 may be attached to a surface to be monitored in any appropriate manner, for example, using an adhesive that is applied to support 30 and/or the surface to be monitored, fastening means such as screws, and the like. After attachment, first surface S 1 of sensing unit 12 is arranged in close proximity to the surface to be monitored. At the same time, RFID chip 18, in particular, sensing circuitry 15 of the same, is spaced from the plane in which coupling antenna 16 is arranged by the height h of the essentially columnar substrate 14.

The same effect can be achieved when, for example, sensing unit 12 is attached to the surface to be monitored in advance, and support 30 including RFID booster antenna 32 is attached to sensing unit 12 in a subsequent step.

In other embodiments, sensing unit 12 may be arranged, for example, directly or indirectly on top of RFID booster antenna 32, for example, with an RF absorbing material 36, for example, a material layer, arranged between the same. Then, support 30, which serves as a housing for both sensing unit 12 and RFID booster antenna 32, may be formed using an overmolding process or the like. Here, an appropriate die will be used such that cavity 34 remains open, i.e., the surface of substrate 14 facing the surface to be monitored is exposed to the outside. Depending on the application, cavity 34 may then be filled by the above-described filler 38, or may remain empty.

It will be appreciated that the above-described RFID sensor device 10 can be used for a wide variety of applications. One particular example is the monitoring of strain and/or temperature of connection bars in electrical power generators. Other applications, however, will be readily apparent to the skilled person.

It will be appreciated that the foregoing description provides examples of the disclosed systems and methods. However, it is contemplated that other implementations of the disclosure may differ in detail from the foregoing examples. All references to the disclosure or examples thereof are intended to reference the particular example being discussed at that point and are not intended to imply any limitation as to the general disclosure.

Recitation of ranges of values herein are merely intended to serve as a shorthand method for referring individually to each separate value falling within the range, unless otherwise indicated herein, and each separate value is incorporated into the specification as if it were individually recited herein. All method steps described herein can be performed in any suitable order, unless otherwise indicated or clearly contradicted by the context.

Although the preferred embodiments of the present disclosure have been described herein, improvements and modifications may be incorporated without departing from the scope of the following claims.

## Claims

1. A sensing unit (12) for an RFID sensor device (10), the sensing unit comprising:
- a substrate (14) having a first surface (S1) and an opposite second surface (S2), the second surface (S2) being separated from the first surface (S1) by a height (h) of the substrate (14);
- a coupling antenna (16) provided on the first surface (S1) of the substrate (14);
- an RFID chip (18) mounted on the second surface (S2) of the substrate (14), the RFID chip (18) being configured to perform RFID communications and including sensing circuitry (15) for sensing at least one physical quantity;
- a pair of passages (20) formed in the substrate (14), the pair of passages (20) extending between the first surface (S1) and the second surface (S2); and
- a pair of electrical conductors (22) arranged in the pair of passages (20), the electrical conductors (22) electrically connecting the RFID chip (18) to the coupling antenna (16) to allow the RFID chip (18) to perform RFID communications via the coupling antenna (16).

2. The sensing unit of claim 1, further comprising a pair of antenna pads (19) formed on the second surface (S2), the pair of antenna pads (19) electrically connecting the RFID chip (18) to the electrical conductors (22).

3. The sensing unit of claim 2, wherein the pair of antenna pads (19) are formed as metallized surface portions on the second surface (S2).

4. The sensing unit of any one of claims 1 to 3, wherein the coupling antenna (16) is formed as a metallized pattern on the first surface (S1).

5. The sensing unit of any one of claims 1 to 4, wherein the coupling antenna (16) includes a single loop or a plurality of loops extending around a central portion (C) of the first surface (S1).

6. The sensing unit of any one of claims 1 to 5, wherein at least one of the pair of passages (20) is formed in an outer peripheral region (P) of the substrate (14).

7. The sensing unit of any one of claims 1 to 6, wherein the pair of passages (20) extends in a direction orthogonal to the first surface (S1) and the second surface (S2).

8. The sensing unit of any one of claims 1 to 8, wherein the sensing circuitry is configured to sense at least one of temperature, strain, ambient light, and moisture.

9. The sensing unit of any one of claims 1 to 8, wherein the substrate (14) is made from glass, ceramic, or a resin such as PP.

10. The sensing unit of any one of claims 1 to 9, wherein the height (h) of the substrate (14) is between around 1 mm and around 5 mm, preferably between around 2 mm and around 4 mm, and a diameter of the substrate (14) is between around 5 mm and around 20 mm, preferably between around 5 mm and around 15 mm.

11. The sensing unit of any one of claims 1 to 10, wherein the substrate (14) has a substantially circular, elliptical, or polygonal cross-section.

12. The sensing unit of any one of claims 1 to 11, wherein the coupling antenna (16) has a resonance frequency close to an RF activating frequency of the RFID sensor device (10).

13. An RFID sensor device (10) comprising:
a support (30);
an RFID booster antenna (32) provided on the support (30);
a cavity (34) formed in the support (30); and
the sensing unit (12) of any one of claims 1 to 13 disposed in the cavity (34), the first surface (S1) of the substrate (14) being arranged adjacent to the RFID booster antenna (32) to inductively couple the coupling antenna (16) to the RFID booster antenna (32), the RFID chip (18) being spaced from the RFID booster antenna (32) by the substrate (14).

14. The RFID sensor device of claim 13, further comprising an RF absorbing material (36) covering at least part of the RFID booster antenna (32) on the side of the sensing unit (12).

15. The RFID sensor device of claim 13 or 14, further comprising a filler (38) provided inside the cavity (34) to cover the RFID sensor chip (18), for example, a thermally conductive and/or transparent or translucent adhesive or paste.
